(19) Europäisches Patentamt
European Patent Office
Office européen des brevets

(11) Publication number: **0 244 087 A2**

(12) **EUROPEAN PATENT APPLICATION**

(21) Application number: 87302721.3

(22) Date of filing: 30.03.87

(51) Int. Cl.4: G01L 9/08, G01L 19/04, G01L 19/08

The title of the invention has been amended (Guidelines for Examination in the EPO, A-III, 7.3).

(30) Priority: 26.04.86 GB 8610252

(43) Date of publication of application: 04.11.87 Bulletin 87/45

(84) Designated Contracting States: DE FR NL

(71) Applicant: STC PLC
10, Maltravers Street
London, WC2R 3HA(GB)

(72) Inventor: Pitt, Gillies David
Glen Sunar, Brockweir Road, Hewelsfield
Nr Lydney, Gloucestershire GL15 6UU(GB)
Inventor: Jones, Roger Edward
20, High Street
Little Shelford, Cambridge CB2 5ES(GB)

(54) **Remote temperature-compensated pressure sensor.**

(57) A temperature compensated pressure sensor system for well logging includes optically activated and interrogated pressure and temperature transducers. The transducer outputs are transmitted in a modulation of an optical carrier to a remote station.

Fig. 1.

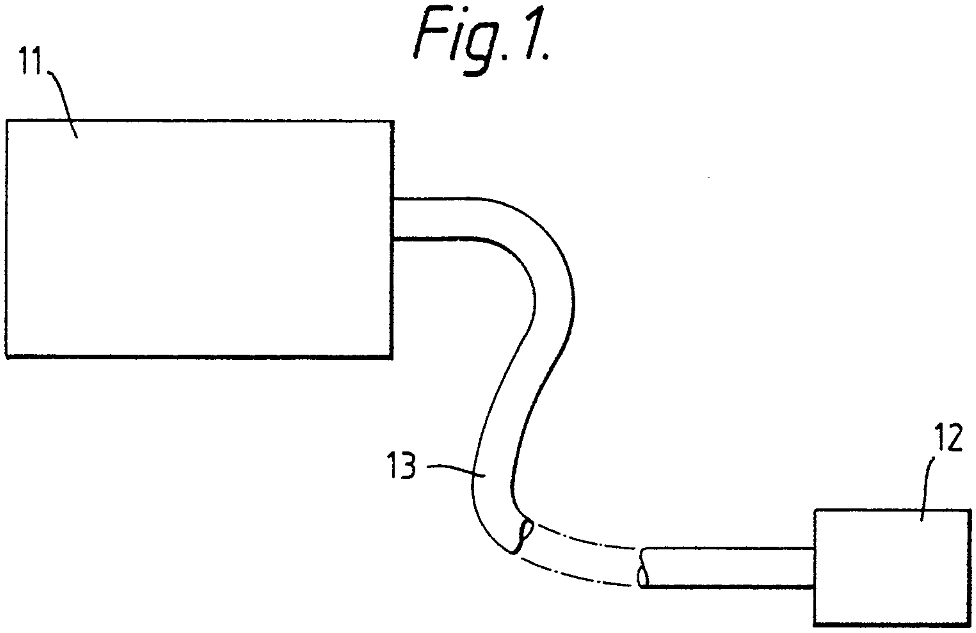


EP 0 244 087 A2

# REMOTE SENSOR

This invention relates to remote sensing systems and in particular to well logging.

For down-well pressure sensing a high degree of resolution is required. Typically a pressure measurement should have a relative accuracy between 1 part in $10^4$ and 1 part in $10^5$, e.g. ± 1 psi in 20,000 psi. The allowable tolerance on the absolute accuracy is a little less stringent and is about ± 10 psi. At such a high degree of resolution the temperature variation of the sensor response must be taken into account. At present this requires the use of two sensor systems, one for temperature and one for pressure, each with its associated monitoring equipment.

The object of the invention is to minimise or to overcome this disadvantage.

Our United Kingdom patent application No. 8527046 relates to a remote pressure sensor for providing a temperature compensated measure of pressure, the sensor including a pressure responsive element, means for illuminating the element with substantially monochromatic light, means associated with the element for modulating the incident light with a first signal corresponding to a pressure condition adjacent the sensor, and temperature responsive means associated with the element for modulating the incident light with a second signal corresponding to the temperature of the element whereby, in use, temperature compensation of the pressure signal may be effected.

We have now found that effective temperature compensation can be effected by the use of a pair of similar transducers only one of which is exposed to an applied pressure.

According to another aspect of the invention there is provided a remote pressure sensor system for providing a temperature compensated pressure measurement, the system including a first vibrational transducer whose resonant frequency corresponds to an applied pressure, a second vibrational transducer the characteristics of which are a function of temperature, first optical means for setting the transducers into a state of vibration, second optical means for interrogating the first and second transducers so as to determine their respective resonant frequencies, and means for calculating from the frequencies of the two transducers a temperature compensated measure of the pressure applied to the first transducer.

An embodiment of the invention will now be described with reference to the accompanying drawings in which:-

Fig. 1 is a schematic diagram of a temperature compensated pressure sensor system;

Fig. 2 shows a sensor head for use with the system of Fig. 1.

Fig. 3 is a general view of the pressure sensor construction;

Fig. 4 shows a pressure transducer for use with the sensor construction of Fig. 3,

Fig. 5 shows the sensor system of Fig. 1 in furthe detail;

Figs. 6 and 7 illustrate the relationship between resonant frequency and pressure and temperature respectively from the pressure transducer of Fig. 4;

and Fig. 8 illustrates a typical frequency spectrum produced by the sensor level of Fig. 2.

Referring to Figs. 1 and 2, the remote sensor system comprises a control section 11 coupled to a remote sensor 12 via an optical fibre 13. The fibre 13 is sheathed e.g. with a plastics material that is stable at the high temperatures typically encountered in an oil well. We prefer to employ a fluorinated plastics resin for this purpose. The sensor head incorporates a pressure sensor 21 (Fig. 2) and a temperature sensor 22 adjacent thereto whereby a temperature compensation of the pressure measurement is provided. Both sensors are interrogated optically, a Y-coupler 25 being provided between the two sensors and the optical fibre 13.

As the coupling between the control station 11 and the sensor 12 is effected via a single fibre it is necessary to provide some means of multiplexing the temperature and pressure signals. This is effected either by frequency division or time division multiplexing. Where frequency division is employed, each sensor 21,22 may be coupled to the fibre 13 via a respective wavelength filter 23,24. Typically these filters are of the interference type and comprise a plurality of layers one half or one quarter wavelength in thickness. Such filters are well known in the art and are described for example in our published specification No. 1,484,284.

The pressure transducer 21 is of the vibrational type in which the vibrational frequency is a function of pressure. The temperature transducer 22, which is also of the vibrational type and of similar construction to the pressure transducer, is packaged in vaccum in a rigid housing, so that it provides an output that is independent of pressure. Typically the transducers are single crystal silicon devices formed by selective etching. Devices of this type can be constructed having a natural frequency of 20 to 200 kHz.

The transducers can be set into vibration by a number of techniques. Typical of these are the following:

(a) Stored mechanical energy release. In this technique the input light power is used to heat a thermal diaphragm switch. Changeover of the switch strikes the sensor element setting it into vibration.

(b) Applied thermal stress. The sensor element is coated with a bimetallic surface film. Intense light pulses applied to the film set up thermal stress to excite the sensor into vibration.

(c) Electrostatic drive. The senor is mounted adjacent a conductive electrode plate. A photovoltaic generator driven from the input light applies a voltage pulse to the electrode thus applying an electrostatic attractive force to the sensor.

Having set the transducer into vibration at its resonant frequency it is next necessary to measure this frequency which is a function of the variable, i.e. pressure, to be determined. This may be effected by arranging for some part of the vibrating structure to reflect incident light back along the fibre to the control station. In some applications a phase locked loop arrangement can be employed to synchronise the control station with the sensor frequency.

Fig. 3 is a general view of the pressure sensor construction. The pressure responsive element of the sensor is provided by a diaphragm 31 supported on a rigid sealed housing 32. The housing 32 is evacuated to provide a constant (zero) reference pressure. Flexure of the diaphragm in response to an applied pressure is detected by a strain gauge transducer 33 of the type wherein a vibrational element has a resonant frequency corresponding to an applied strain. Power for maintenance of the transducer 33 in a state of vibration is provided via an optical fibre 34 coupled to the sensor via a bulkhead connector 35. A fibre stub 36 couples the transducer 33 to the connector 35.

Fig. 4 shows a preferred pressure transucer for use with the sensor of Fig. 3. The temperature transducer is of similar construction. The transducer is typically a butterfly or double see-saw oscillator fabricated as a unitary construction by selective etching from a single crystal silicon. The transducer comprises a substrate body 11 on which a pair of elongate members 42 are supported on stretched filaments 43. The elongate members are linked at their adjacent ends by a flexible coupling 44. In use the members 42 oscillate each in a torsional mode about their respective transverse axes, the coupling 44 ensuring that the members 42 move together and in antiphase. The optical fibre stub 36 is disposed with its free end adjacent the coupling 44 whereby input high intensity light pulses are directed on to the coupling. Each pulse causes a momentary thermal expansion of the coupling 44 thus driving the transducer into oscillation at a frequency corresponding to the moments of inertia of the elongate members 42 and the tension in the filaments 43, the latter being a function of a strain applied to the transducer via the diaphragm 31 (Fig. 3). Advantageously the coupling is coated with a light absorbent material (not shown) having a relatively high thermal expansion coefficient whereby the efficiency of the optical drive is enhanced. In the period between the intense pulses the coupling 44 is illuminated with a steady, lower intensity, light signal, typically of 1300nm wavelength. This signal is reflected by the coupling and is modulated with the oscillation frequency of the transducers. Typically the optical power pulses are of 10mW in intensity at a wavelength of 850nm and have a 50% mark space ratio. This has been found to provide a vibrational amplitude of 5 to 50nm. Detection of resonance, and measurement of the resonant frequency, may be performed via a phase locked loop circuit.

The optical system of the sensor is shown in further detail in Fig. 5. Optical power pulses are provided by a laser diode 51 operated in the pulsed mode via a drive circuit 58, and are transmitted to the sensor head via a wavelength division multiplexer 52 and a fibre 53, e.g. a 50/125 multimode fibre. The steady substantially monochromatic interrogation signal is provided by a source 54, e.g. an edge emitting light emitting diode (ELED). The light output from the diode 54 is fed via a coupler 55 and the wavelength division multiplexer 52 to the fibre 53. The temperature sensor is also be of the vibrational type but having a natural frequency distinct from that of the pressure sensor. The return signal is then modulated with two frequencies which are recovered and resolved to provide the temperature and pressure signals. With this arrangement the two detectors can be mounted in a common evacuated housing. Return signals from the sensor head are fed via the multiplexer 52 and coupler 55 to a detector 56 whereby both the wavelength and the modulation frequency of the return signal are measured. These two outputs from the detector 56 are fed to a signal processor 57 which converts the two measurements into a temperature compensated pressure value. The signal processor 57 also provides two series of pulse signals to the laser drive circuit 58 whereby each transducer is maintained in a state of vibration at its respective resonant frequency. Typically a phase-locked loop arrangement is employed to ensure that the signal process responds to changes in frequency arising from a change in pressure and/or temperature. One form of phase-locked loop is described in our co-pending United Kingdom application No. 8629820, but it will be clear that the present arrangement is not restricted to this particular form of frequency control.

Referring now to Figs. 6 and 7, the response characteristics of the two transducers of the sensor head are illustrated. Fig. 6 shows a typical response of the pressure transducer for pressures between 0.1 and 1 atmosphere applied directly to the transducer diaphragm. It will be appreciated that, in use, when the transducer is exposed to the very high pressures pertaining in deep wells, the transducer diaphragm will be contacted by a relatively stiff auxiliary diaphragm, this latter diaphragm being exposed to the high pressure. As can be seen from Fig. 6, a significant frequency variation is obtained over the pressure range employed. The effect of temperature on the resonant frequency increases with increasing pressure. Thus, raising the temperature, e.g. from $T_1$ to $T_2$ reduces the magnitude of the change in frequency resulting from a change in pressure.

The temperature effect is illustrated in Fig. 7. For a typical transducer there is a linear relationship between the present frequency and the temperature, the frequency decreasing by about 50 parts per million per °C.

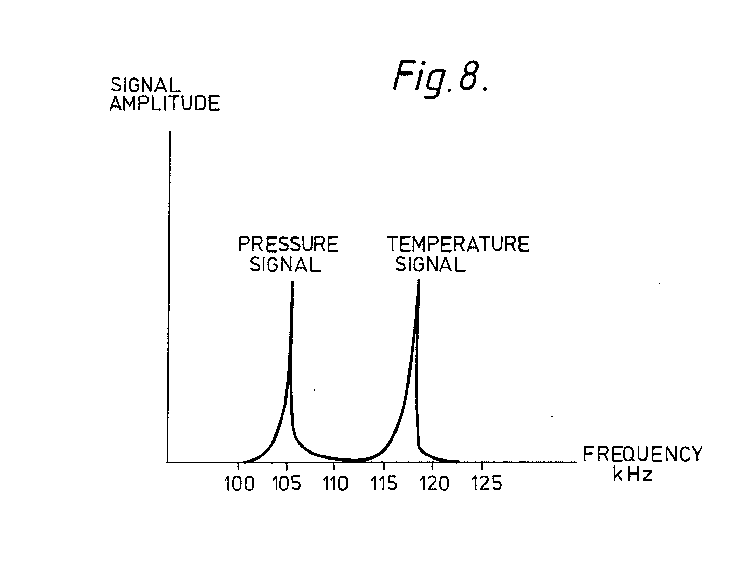

Fig. 8 shows a typical frequency spectrum derived from the detector 56 (Fig. 5). The two transducers of the sensor head are so constructed that their resonant frequencies are similar, a typical frequency separation being 10 to 20 kHz. In use, the signal processor determines the frequency of the pressure transducer and calculates a corresponding pressure value. The frequency of the temperature transducer is then used to determine a temperature value and hence to provide a correction factor for the pressure calculation. The electronic and software techniques required for this operation will be readily apparent to those skilled in the art.

Whilst the pressure sensor system has been desribed herein with particular reference to well logging it will be appreciated that it is not so limited and that the system can be used for remote sensing in other hostile environments, e.g. for nuclear reactor monitoring or for chemical process control.

## Claims

1. A remote pressure sensor system for providing a temperature compensated pressure measurement, the system including a first vibrational transducer whose resonant frequency corresponds to an applied pressure, a second vibrational transducer the characteristics of which are a function of temperature, first optical means for setting the transducers into a state of vibration, second optical means for interrogating the first and second transducers so as to determine their respective resonant frequencies, and means for calculating from the frequencies of the two transducers a temperature compensated measure of the pressure applied to the first transducer.

2. A remote pressure sensor for providing a temperature compensated pressure measurement, the system including a first vibrational transducer whose resonant frequency corresponds to an applied pressure, a second vibrational transducer similar in construction to the first transducer and whose resonant frequency is a function only of temperature, a first, pulsed, optical source whereby each transducer is maintained in a state of vibration at its respective resonant frequency, a second, continuous, optical source coupled to the transducers whereby an optical signal modulated with each transducer frequency is derived, means for determining the frequency of each said modulation and for calculating therefrom a temperature compensated measure of a pressure to which the first transducer is exposed, and means for deriving from each said modulation a control signal whereby the pulsed source is operated so as to derive each said transducer at its respective resonant frequency.

3. A remote sensor system as claimed in claim 1 or 2, wherein each said transducer includes first and second elongate members each supported on stretched filaments whereby that element can vibrate, said elements being coupled together so as to vibrate in antiphase.

4. A remote sensor system as claimed in claim 1, 2 or 3, wherein optical signals are carried to and from the first and second transducers via a single optical fibre.

5. A remote sensor system as claimed in claim 4 or 5 wherein said first and second transducers are mounted in a common evacuated housing.

6. A temperature compensated remote pressure sensor system substantially as described herein with reference to and as shown in the accompanying drawings.

Fig.1.

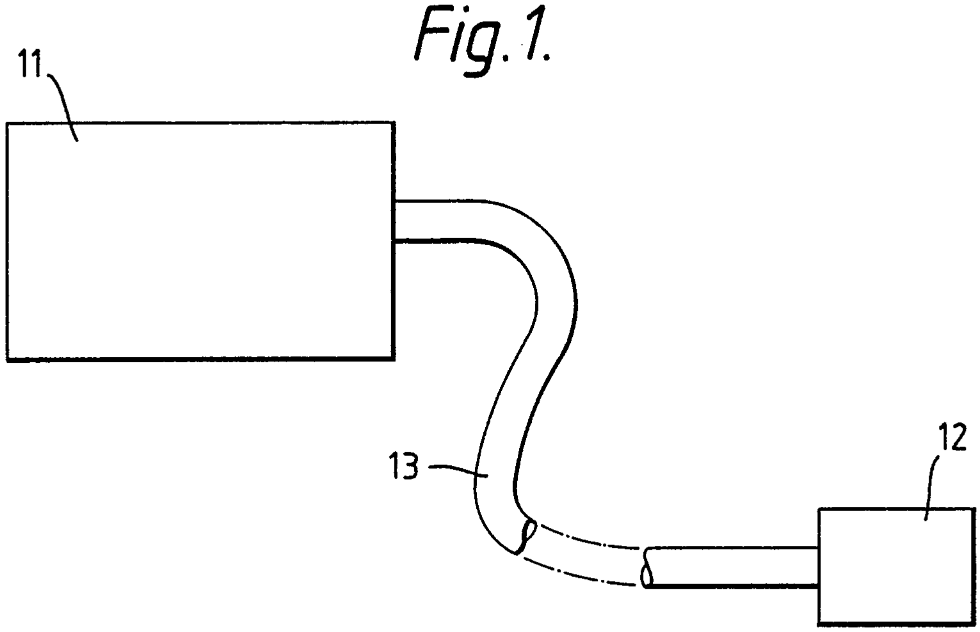


Fig.2.

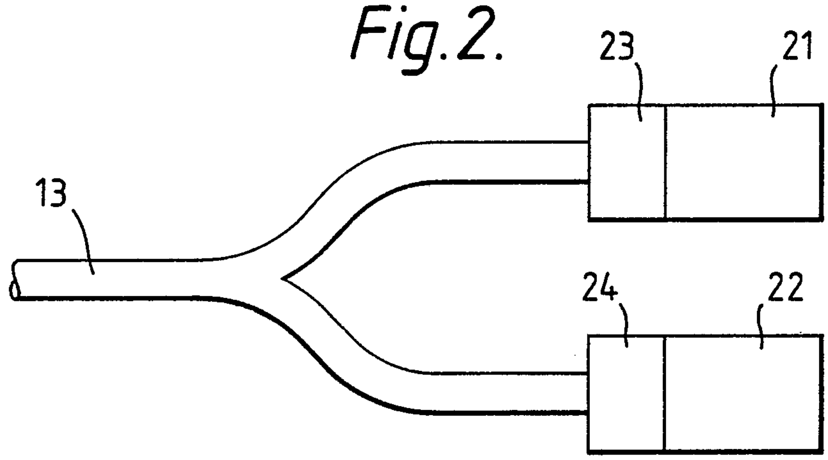


Fig.3.

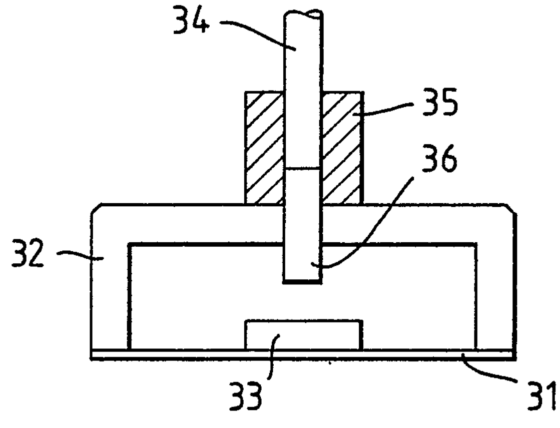

Neu eingereicht / Newly filed
Nouvellement déposé

Fig. 4.

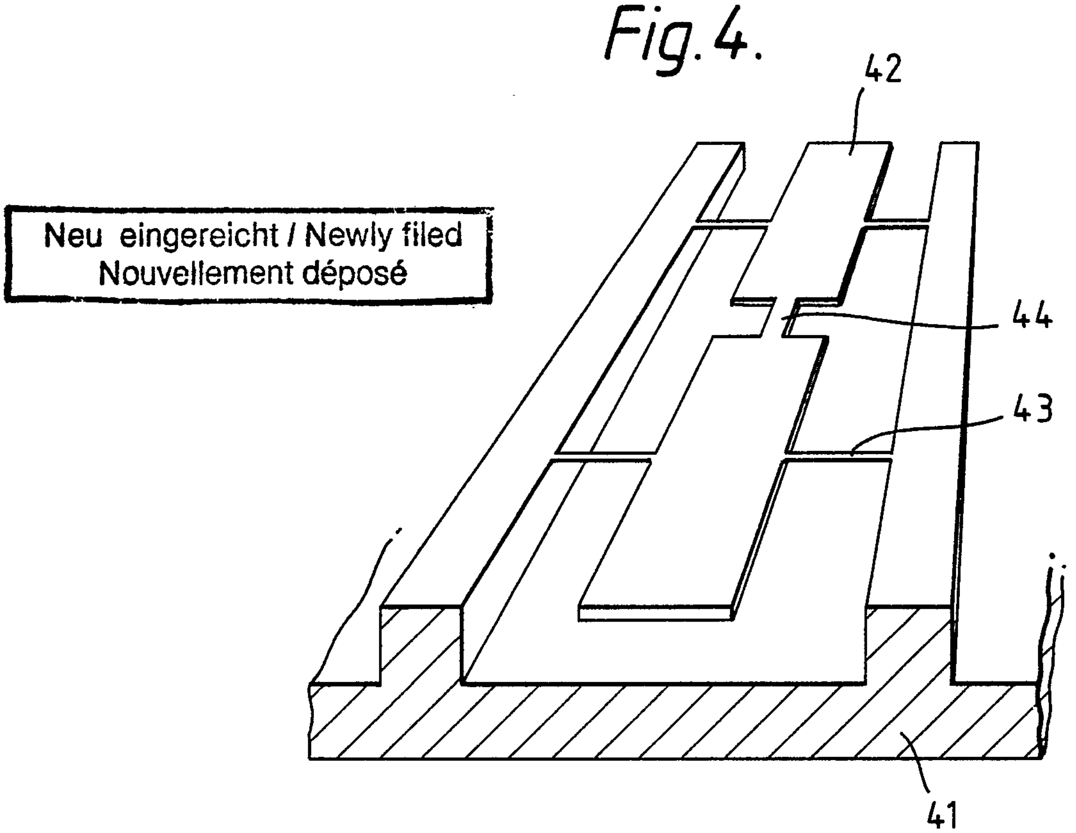


Fig. 5.

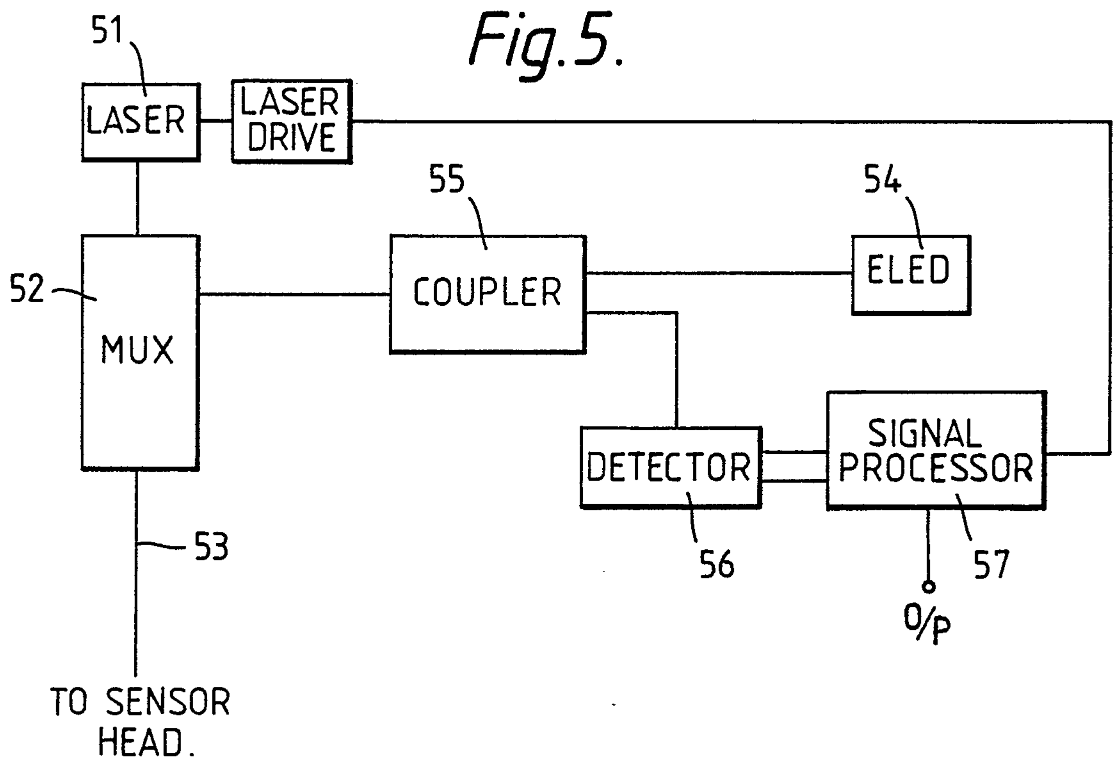

Neu eingereicht / Newly filed
Nouvellement déposé

Fig.6.

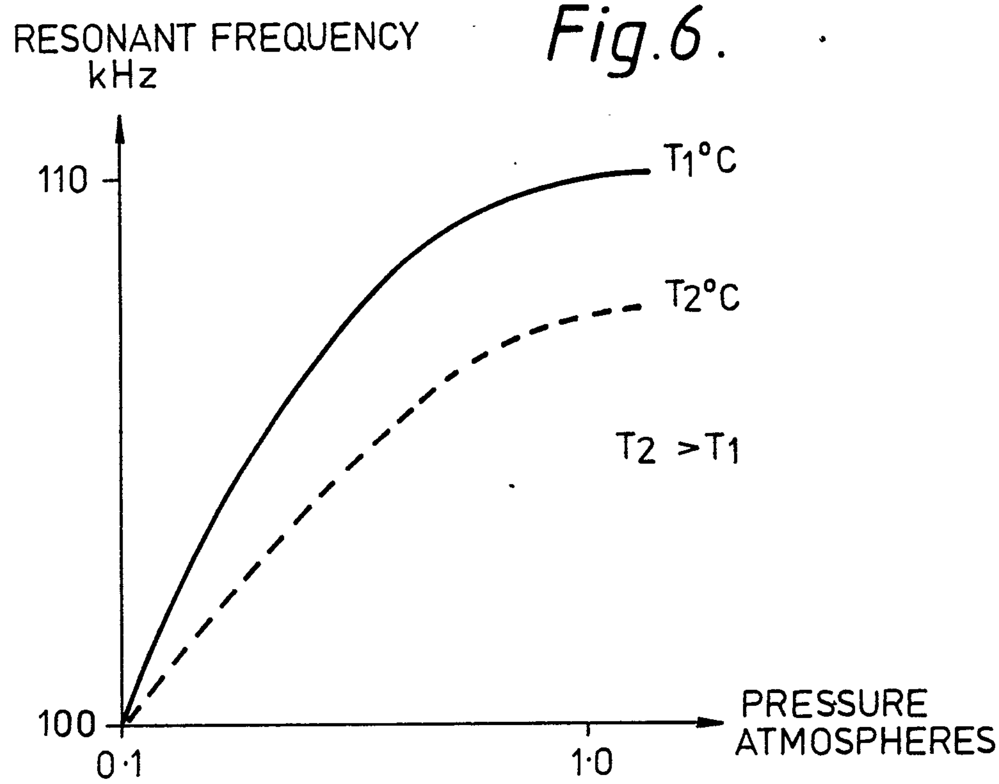


Fig.7.

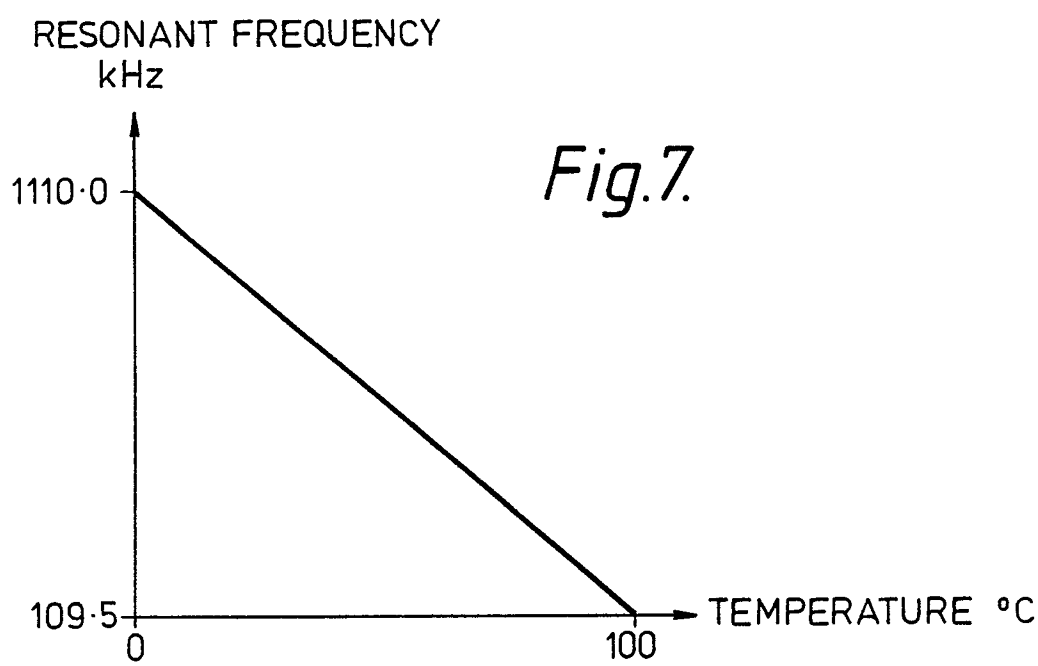

Neu eingereicht / Newly filed
Nouvellement déposé

Fig. 8.